# EUROPEAN PATENT APPLICATION

(11) **EP 1 698 596 A1**
(43) Date of publication of application: **06.09.2006**
(21) Application number: 04808031.1
(22) Date of filing: 21.12.2004
(51) Int. Cl.: C03B 5/43

(54) **PRODUCTION APPARATUS FOR BOROSILICATE SHEET GLASS ARTICLE, PRODUCTION PROCESS THEREFOR AND BOROSILICATE SHEET GLASS ARTICLE**

(30) Priority: 26.12.2003 JP 2003432042; 11.08.2004 JP 2004233985
(71) Applicant: Nippon Electric Glass Co., Ltd., Otsu-shi, Shiga 520-8639 (JP)
(72) Inventor: KATO, Mitsuo Nippon Electric Glass Co., Ltd., Otsu-shi, Shiga 5208639 (JP); AOKI, Shigeaki Nippon Electric Glass Co., Ltd., Otsu-shi, Shiga 5208639 (JP); KADA, Yasuhisa Nippon Electric Glass Co., Ltd., Otsu-shi, Shiga 5208639 (JP)
(74) Representative: Tetzner, Michael
(86) International application number: PCT/JP2004/019680
(87) International publication number: WO 2005/063634

(57) **Abstract**

A production apparatus (10) for borosilicate sheet glass article according to the present invention, includes a structural member of refractory material being brought into contact with molten glass (G), made of heat resistant metal material (P) containing a platinum group element, etc., in which the structural member is furnished with coating film or shielding material (K) having a shielding capability higher than that of heat resistant metal material (P), etc. against gas components having a diameter equivalent to or smaller than that of oxygen molecule, and the coating filmor shielding material (K) disposed on the reverse side of surface brought into direct contact with the molten glass (G). The degree of change of shielding capability after being held at 1600°C for 10 days is 1/10 of an initial shielding capability or less.

## Description

### Field of the Invention

The present invention relates to an apparatus for producing a borosilicate sheet glass article, a method of producing a borosilicate sheet glass article, and to a borosilicate sheet glass article.

### Background of the Invention

In glass production industry for producing a borosilicate glass sheet glass article formed of borosilicate sheet glass containing boron and silicon as main components, predetermined amounts of mixed inorganic raw materials such as silica sand and boric acid are heated into a high temperature state through various heating methods for a reaction for forming molten glass, and the molten glass is homogenized and then formed into a desired shape, to thereby produce a borosilicate sheet glass article to be used in various applications. An apparatus for producing a borosilicate sheet glass article includes: a glass melting tank provided with equipment such as a burner or an electrode for heating a raw material mixture and formed of a refractory material; a fining tank for improving homogeneity of molten glass; and various devices for forming the molten glass into a desired dimensions and shape. In production of a borosilicate sheet glass article by using such an apparatus, examples of defects to be formed in the borosilicate sheet glass article, which cause problems in quality, include: defects caused by inhomogeneous glass having a different composition from that of a glass article, which are referred to as threads, strings, streaks, cords, scratches, knots, cords, striae, cat scratches, and reams; defects caused by an inorganic raw material such as silica sand or boric acid, a refractory material, and the like to be used, which are referred to as bubbles, blisters, and seeds; and defects caused by deterioration of a refractory material to be used, crystallization of the glass composition, and the like, which are referred to as stones.

In the case where the defects are caused by the glass production apparatus, suitable measures are provided in accordance with the application, forming method, etc. of the borosilicate sheet glass article. For example, an apparatus for producing a glass sheet used for forming a display substrate to be used for a liquid crystal display apparatus employs a sheet glass forming method such as a float method, a slit down method, or a fusion method. The float method involves a problem that impurities originated from tin used in a float bath may lead to impurity defects on a glass surface, and countermeasures for the problem have been required. Further, forming method such as a slit down method (also referred to as a slot down method), a fusion method, or an overflow down draw method involves problems including bubbles or impurities in borosilicate sheet glass, which are caused by a heat resistant metal material such as platinum to be used for the production apparatus, coloring of the glass, and the like.

Deterioration of the heat resistant metal material such as platinum and mixing thereof into the molten glass cause glass defects. As a measure for solving the problems, JP 05-5188 A discloses an improved apparatus employing a refractory material to be used for a glass production apparatus formed of a laminate structure of four layers containing a metal and ceramics. JP 2003-221238 A discloses an improved method including performing high temperature heat treatment before use of a heat resistant metal material for preventing formation of bubbles from the heat resistant metal material. JP 2002-167674 A and JP 2002-180268 A each disclose an improved method including coating iridium or an iridium-alloy surface with platinum or a platinum-alloy material, which is effective for extending a life of an apparatus for producing high quality glass such as optical glass or optical fiber in high temperature use.

By contermeasures for Various defects in the manufacturing apparatus for the molten glass, there has been an improvement to enable the long-period production. For example, JP 6-206776 A discloses an invention relating to a refractory powder for spray coating prepared by mixing a magnesia clinker or the like, and shale orperlite. JP 2002-20851 A discloses an invention relating to molten glass conveying equipment including a steel substrate which is coated with a composite spray of graphite particles and one of Ni, W, Ti, and Al onto the glass-contacting-side surface.

As described above, the measures have been proposed for preventing inclusion of defects in the molten glass due to the deterioration of the surrounding refractory with time in a high temperature environment, where the refractory is used in the forming apparatus to a molten glass, and for achieving the stable use of the apparatus for producing a borosilicate sheet glass article over a long period of time. However, the measures described above are not sufficient in reality. In particular, recently produced novel glass articles are required to have even higher homogeneity. For example, thin sheet glass to be used for a liquid crystal display has strict requirements for high quality such as inhomogeneity, bubbles, and impurities in glass which degrade optical functions because an image is displayed through the sheet glass and the image is seen at close range.

### Disclosure of the Invention

The inventors of the present invention have proposed the invention capable of solving the above-mentioned problems of causing inhomogeneity due to bubbles and impurities to be mixed into molten glass, and an object of the present invention is to provide an apparatus for producing a borosilicate sheet glass article, a method of producing a borosilicate sheet glass article using the production apparatus, and a borosilicate sheet glass article having high quality.

An apparatus for producing a borosilicate sheet glass article of the present invention includes a structural member formed of a heat resistant metal material containing a platinumgroup element and/or a refractory material containing an inorganic oxide each being contacted with molten glass, in which the structural member has shielding capability against gas components each having a diameter equal to or smaller than a diameter of an oxygen molecule, which varies by 1/10 or less of an initial shielding capability after being held at 1,600°C for 10 days.

The apparatus for producing a borosilicate sheet glass article of the present invention includes a structural member which consists of a heat resistant metal material containing at least one of a platinum group element and/or a refractory material containing an inorganic oxide, each being contacted with molten glass. The structural member having the shielding capability against gas components each having a diameter equal to or smaller than the diameter of the oxygen molecule varying by 1/10 or less of the initial shielding capability after being held at 1,600°C for 10 days refers to a structural member contacted directly with the molten glass in the manufacturing apparatus speciallized for inorganic oxide borosilicate sheet glass article, which consists of the heat resistant metal material containing a platinum group element (platinum, iridium, osmium, palladium, rhodium, or ruthenium) and/or a refractory material containing an inorganic oxide such as ceramics. The above-mentioned structural member also refers to a structural member having 'higher' shielding capability against gas molecules each having a molecular diameter equal to or smaller than a diameter of an oxygen (O₂) molecule or against ions each having an ionic diameter equal to or smaller than the diameter of the oxygen (O₂) molecule, where the 'higher' is used here in the comparison with shielding capabilityof the heat resistant metal material or the refractory material, and the 'higher' shielding capability is attained by employing appropriate particles dispersed in a surface layer and/or back surface layer, or the inside of the structural member contacting with the molten glass and/or by selecting a material used for the structural member. The shielding capability against gas components each having a diameter equal to or smaller than a diameter of an oxygen molecule is controlled to have the variation to be settled within 1/10 or less of an initial shielding capability even after being held at 1, 600°C for 10 days.

The structural member having shielding capability varying by 1/10 or less of the initial shielding capability after being held at 1,600°C for 10 days refers to: a structural member allowing a glass article requiring high temperature heating such as borosilicate sheet glass to realize initial shielding capability of 10 times or more of that of platinum with thickness to those of platinum and having sufficient strength to maintain the apparatus' structure; and a structural member having shielding capability of 90% or more of initial shielding capability as 100% after being held at 1, 600°C for 10 days in an air atmospheric environment. In order to verify that the shielding capability is as 10 times large as that of platinum or more than that, it is reasonable, for example, to evaluate degree of a problematic phenomenon (ex. bubble) ; where the structural member's thickness is set to be equal to or smaller than that of platinum and degree of the problem is measured to check whether the degree is suppressed to 1/10 or less. The evaluation can be performed also in a way that the structural member's thickness is set to be 1/10 or less of that of platinum and degree of the problem is measured to check whether the degree is suppressed to the same or less. The shielding capability of the structural member of 90% or more of initial shielding capability as 100% after being held at 1,600°C for 10 days in the air atmospheric environment can be verified by evaluating degree of corrosion for the heat resistant metal material containing a platinum group element and/or the inorganic oxide of the structural member of the present invention with a thickness of 1/10 or less of that of platinum, for example. To describe specifically, concentration or number-of-particles of the heat resistant metal material containing the platinum group element and/or the inorganic oxide in the glass is measured, and difference in values between the non-heated sample and the heated sample at 1, 600°C for 10 days is evaluated. Regarding bubble-problems, evaluationof the shielding capability can be performed by as follows : comparing initial gas volume in the bubbles generated with a platinum member of the present invention and initial gas volume in the bubbles generated with a platinummember not employing the present invention; estimating the net value of the bubble-preventing effect of the present invention by the data comparison; and evaluating how the volume of the generated gas increases in the bubble after the platinum member is held at 1,600°C for 10 days. The bubbles in the glass can be evaluated also by measuring the number of generated bubbles in stead of the volume of the generated gas.

In the case where the shielding capability of the structural member against gas components each having a diameter equal to or smaller than the diameter of an oxygen molecule varies by more than 1/10 of the initial shielding capability after being held at 1, 600°C for 10 days, high performance may be realized temporarily, but its initial performance cannot be maintained over a long period of time. With such a shielding performance, operational conditions of the glass production apparatus must be re-adjusted frequently, and it is difficult to maintain certain quality of glass in the production. In view of the above-mentioned points, variation of the shielding capability of the structural member is preferably settled within 1/15 or less of the initial shielding capability after being held at 1,600°C for 10 days, and more preferably settled within 1/20 or less of the initial shielding capability after being held at 1,600°C for 10 days.

In the process to attain 'higher' shielding capability b employing appropriate particles present in a dispersed state on a surface and/or back surface of a part contacted with the molten glass, in an inner layer, or in the structural member, and a material used for the structural member the above-mentioned performance is realized not by single use of using as a structural member having heat resistance but by use thereof with another member or material having shielding capability.

To be specific, the heat resistant metal material containing a platinum group element (platinum, iridium, osmium, palladium, rhodium, or ruthenium) and/or the refractory material containing an inorganic oxide such as a ceramics may have a structure of two layers or more, and a layer formed of a glass, metal, or ceramics may be formed as an inner layer of the structure. For realization of such a structure, the inner layer does not require heat resistance equal to that of a member forming a surface part directly contacted with molten glass and may employ a component capable of realizing the shielding capability alone. Further, an encapsulated component capable of realizing shielding performance may be embedded in the heat resistant metal material containing the platinum group element (platinum, iridium, osmium, palladium, rhodium, or ruthenium) and/or the refractory material containing the inorganic oxide such as the ceramics; the component is released into the structural member with time in a heating condition at high temperatures. The component capable of realizing the shielding capability may be diffused from a surface and/or back surface of the structural member for realizing predetermined high shielding capability against gas molecules each having a molecular diameter equal to or smaller than the diameter of an oxygen (O₂) molecule or against ions each having an ionic diameter equal to or smaller than the diameter of an oxygen (O₂) molecule.

Any material may be used as a material used for the heat resistant metal material containing the platinum group element and/or refractory material containing an inorganic oxide forming an interface in direct contact with the molten glass as long as the heat resistant metal material or refractory material has low reactivity with the molten glass in high temperatures and has sufficient structural strength in a high temperature state. The heat resistant metal material may be an alloy or a metal having small amounts of impurities. The refractory material may be a refractory material containing plural components or a refractory material containing a single component. The metal material and the refractory material may be mixed. A material having a specific function may be used for a part requiring such properties. Desired performance may be realized by using plural of materials in combination.

The shielding capability against gas components each having a molecular diameter equal to or smaller than a diameter of an oxygen molecule refers to shielding capability against gas molecules each having a molecular diameter equal to or smaller than a diameter of an oxygen or ions each having an ionic diameter equal to or smaller than a diameter of an oxygen molecule. For example, water, hydrogen, hydrogen ions, helium, and argon are included as molecules or ions of the gas. Such molecules or ions refer to molecules or ions involved in a reaction with the heat resistant metal material containing the platinum group element or the refractory material containing an inorganic oxide, to thereby cause degradation of such a material, peeling or the like of the material, and glass-melt-contamination by the impurities. In addition, the gas molecules and ions may become defects inhibiting homogenization of the molten glass by generating fine particles of impurities in the molten glass.

That is, the gas components each having a moleculardiameter equal to or smaller than the diameter of the oxygen molecule refer to gas components each having the molecular diameter or ionic diameter equal to or smaller than the molecular diameter of oxygen of 3.0 Å (angstrom). Specific examples of the gas components include: a part of NOx components (NOx components each have a diameter of 2 to 3.5 Å depending on their structures); water (2.7 Å); hydrogen (2.2 Å); Ar (2.9 Å); He (2.0 Å); H⁺; and OH⁻. Examples thereof do not include gases such as N₂ (3.2 Å), Cl₂ (3.7 Å), SO₂ (3.6 Å), CO₂ (4.6 Å), and CO (3.8 Å). Note that the molecular diameter is calculated from gas viscosity.

The heat resistant metal material containing the platinum group element and/or the refractory material containing the inorganic oxide cannot exhibit high shielding capability against reactive gases or ions each having a small molecular diameter or ionic diameter such as hydrogen, water, and hydrogen ions, or against non-reactive gases which may cause defects in the glass such as helium and argon. A mechanism of how this low shielding capability leads to defects in the glass itself is not specifically fined. However, various gases may be infused into the metal material or the refractory material so as to expand structural defects such as holes originally present in the metal material or the refractory material, for example, to thereby possibly degrade high temperature durability of the material. Further, an equilibrium state of oxygen solubility, reactivity, or the like in the molten glass may be disturbed by an action of intermediates or the like formed temporarily through a reaction with single gas species infused into the material, a residual gas present in the metal, etc. , an action of the platinum group element as a reaction catalyst, or the like. Thus, oxygen enrichment in the molten glass may be induced, to thereby oxidize the metal material or the refractory material which may be melted into the molten glass as an oxide. Further, a reaction causing coloring, formation of inhomogeneous glass, or the like maybe induced in the glass. Thus, it is important to reduce a risk of defects in the glass by realizing a high initial shielding capability of the structural member against molecules or ions each having a diameter equal to or smaller than that of an oxygen molecule, and by maintaining the variation of shielding capability of the structural member within 1/10 or less of the initial shielding capability after being held at 1,600°C for 10 days.

Any system of heating device may be used for heating glass raw materials and molten glass. Examples of the heating device include: a heating device employing a burner for combusting a liquid, solid, or gaseous fuel; a heating device utilizing electricity such as a heating element or an electrode; and a heating device utilizing magnetic waves such as infrared rays. In any case, the heating device must allow easy heating to a temperature of at least 1,500°C for practical use, and thus must have sufficient specifications. The heating device may employ one heating system or a combination of prural systems.

The shielding capability not only refers to shielding capability at 1,600°C, but also includes shielding capability at a temperature of 1,600°C or lower, that is, shielding capability in a temperature range of 500°C to 1,600°C providing similar performance to that at 1,600°C and preferably maintained sufficiently high. That is, the apparatus for producing a borosilicate sheet glass article includes a structural member formed of a heat resistant metal material containing the platinum group element and/or the refractory material containing an inorganic oxide, each contacted with the molten glass, in which the structural member realizes shielding capability on a back side of a surface contacted with the molten glass for producing a glass article exceeding normal shielding capability of the back side.

For evaluation on the performance of the apparatus for producing a borosilicate sheet glass article or the present invention by evaluating a Pt-rhodium container, for example, a Pt-rhodium container or crucible employing the structural member having functions regarding the shielding capability of the present invention is prepared. Then, molten glass is held in the Pt-rhodium container or crucible in a high temperature state of 1,600°C for predetermined days (that is, 10 days) and evaluation on corrosion-susceptibility or homogeneity of the molten glass is compared with an initial performance at 1, 600°C (that is, performance within 4 hours) for evaluation on the performance of the Pt-rhodium container or crucible. Forexample, the homogeneity may be evaluated by measuring the number of impurities in the molten glass. The corrosion-susceptibility may be evaluated by analyzing elements to be solved into the molten glass may be analyzed. For the evaluation of the shielding capability, the molten glass in the Pt-rhodium container or crucible employing the structural member having functions regarding the shielding capability of the present invention may be poured out once after 10 days, and a fresh glass with the same composition may be charged thereinto. Then, the whole is held at a set temperature for 4 hours or less, and the number of bubbles generated at an interface between the Pt-rhodium container or crucible and the molten glass may be compared with the initial performance (that is, performance within 4 hours). For easy comparison of the shielding performance, a thickness of the structural member is preferably as small as possible for the evaluation. Meanwhile, for an evaluation of bubble formation by the apparatus for producing a borosilicate sheet glass article of the present invention, a container or crucible employing the structural member having functions regarding the shielding capability of the present invention is prepared. Then, the container or crucible is held in the in a high temperature state of 1,600°C for a given time (that is, 10 days), and then glass is melted in the container or crucible. The number of bubbles in the glass is evaluated and compared with initial performance at 1,600°C (that is, the number of bubbles in the molten glass in the container held for 4 hours or less). The evaluation on performance of the structural member of the present invention involves evaluation of the shielding capability in a temperature range of 500°C to 1,600°C, and thus the evaluation is preferably performed in a high temperature state held at a corresponding temperature.

In an apparatus for producing a borosilicate sheet glass article according to the present invention, the structural member suitably includes at least one of a coating film and a shielding material each having shielding capability formed on a back side of a surface contacted with the molten glass.

The structural member including a coating film and/or a shielding material each having shielding capability formed on the back side of the surface contacted with the molten glass refers to the structural member including the coating film or the shielding material having high shielding capability against gas molecules each having a molecular diameter equal to or smaller than the diameter of the oxygen (O₂) molecule or against ions each having an ionic diameter equal to or smaller than the diameter of the oxygen (O₂) molecule compared with the shielding capability of the heat resistant metal material or the refractory material, that is, the coating filmor the shielding material capable of controlling and suppressing gas permeability, formed on the back side of the surface contacted with molten glass of the structural member contacted with the molten glass.

A part on the back side of the surface contacted directly with the molten glass refers to a part which is not contacted with the molten glass. A part indirectly contacted with the molten glass by infiltration or the like corresponds to the part which is not contacted with the molten glass. Further, a part on a surface of the heat resistant metal material containing a platinumgroup element and/or the refractory material containing an inorganic oxide appearing wet through evaporation or vaporization of components in the molten glass corresponds to the part which is not contacted directly with the molten glass. That is, the part which is not contacted with the molten glass refers to a part except a part immersed in a liquid phase of the molten glass, contacted therewith, and forming an interface with the molten glass, and refers to a predetermined part of the structural member forming the apparatus of the present invention.

Specific examples of the part on the back side of the surface contacted directly with the molten glass include the back side parts which are not contacted directly with the molten glass such as: an outer wall surface, a bottom surface, or the like of a crucible as a heat resistant metal container holding the molten glass; a part corresponding to an outer surface of a main member (such as a tank, a melting tank (chamber), a fining tank (chamber), a stirring tank (chamber), an operation tank (chamber), a forebay, a crucible, a pot, a throat, a riser, a feeder, a forehearth, a drain, a doghouse, or other specific parts) of a glass melting furnace forming the apparatus for producing a borosilicate sheet glass article formed of the refractory material or the heat resistant metal such as a hearth (or a paving or a bottom block), a furnace wall (or a tank block or a side wall), a bridge wall, a dam wall, a sill, a pipe, or a gutter; a part corresponding to an inner surface of a hollow structure of a member formed by the heat resistant metal material and having an outer surface immersed in the molten glass for homogenizing the molten glass such as a stirrer, a tweel, a needle, a gate, a damper, a blender, a rotor, a tube, or a paddler; and a part corresponding to an outer periphery, an outer surface, or the like of the refractory material or the heat resistant metal material required for forming a forming member for precise formation of the molten glass such as a roll, a slit (a slot), a riptile, a skimmer, a wet back tile, a draw bar, a spout, a cup, an orifice, a fusion pipe, a bushing, and a nozzle (or a spinning hole).

The coating film provides predetermined shielding capability on the back side of the surface contacted with the molten glass or on an inner layer and is adhered to the back side of the surface contacted with the molten glass. Meanwhile, the shielding material requires no adhesive property to the back side of the surface contacted with the molten glass or the inner layer for realizing shielding capability on the back side and needs not be formed of a material similar to that of a film. The shielding material may employ any material which does not inhibit the performance.

One or both of the coating film and the shielding material is provided to a part of the structural member which is not contacted directly with the molten glass when a part of the structural member is immersed in the molten glass. The coating film or the shielding material may be provided to a part of a different structural member contacted with the molten glass.

The coating film and/or the shielding material is preferably not provided to a part contacted with the molten glass because the coating film or the shielding material provided to the part contacted with the molten glass for a long period of time may degrade with time though depending on a material for the coating film, a providing method, and the like. In such a case, durability of the apparatus may degrade even if the heat resistant metal or the refractory material exhibits sufficiently high durability. Further, in the case where the coating film or the shielding material deteriorates with time, the peeled coating film or shielding material may be mixed into the molten film, to thereby cause problems such as decrease in homogeneity of the molten glass and decrease in dimensional accuracy of the glass article to be formed. Thus, in the case where some measures must be provided to the part contacted with the molten glass for any reason, the measures must be provided to a very limited area in a limited way, and the material used for the molten glass and a contact temperature must be determined after thorough studies.

The coating film and/or the shielding material may prevent physical permeation of the gas molecules or ions each having a diameter equal to or smaller than that of an oxygen molecule. The coating film and/or the shielding material may contain hydrogen, water, hydrogen ions, or a gas such as helium, argon, or carbon monoxide each having a diameter equal to or smaller than that of an oxygen molecule in a nearly saturated state for utilizing a chemical equilibrium state, to thereby realize a shielding effect. In order to achieve such a chemical action like that, the coating film and/or the shielding material may have a composition whose melt includes the gas molecules or ions each having the diameter equal to or smaller than that of the oxygen molecule. In addition, the coating film and/or the shielding material is preferably structurally capable of maintaining an oxygen partial pressure state realizing a stoichiometric non-equilibrium state or the like, to thereby realize the effect of shielding those gas molecules or ions.

In the apparatus for producing a borosilicate sheet glass article of the present invention, the coating film and/or the shielding material are desired to be employed onto a larger area in terms of providing a clearer effect but this requires larger effort for realizing the present invention perfectly. In view of the above-mentioned points, an evaluation is preferably performed outside a laboratory on an area larger than 10 cm² for confirming the clear effect in actual production. However, in a large-scale production facility for continuous mass production, an evaluation is preferably performed on a large area equipped with the present invention.

In the apparatus for producing a borosilicate sheet glass article of the present invention, the coating film and/or the shielding material may include borosilicate sheet glass.

The coating film and/or the shielding material including borosilicate glass refers to a coating film or a shielding material having an amorphous structure containing boron and silicon as main components and containing a material except organic glass in a content of 1% or more in mass%.

The coating film and/or the shielding material may contain components except the borosilicate glass as long as the coating film and/or the shielding material includes the borosilicate glass and is a product formed as a coating film or a structure capable of realizing various shielding effects with a predetermined required thickness. The coating film is capable of realizing desired shielding performance against gases or ions each having dimensions smaller than those of an oxygen molecule by coating a predetermined part, and preferably has sufficiently high heat resistance. As described above, the coating film must be adhered to a predetermined part, but the shielding material needs not be adhered to a predetermined part. The shielding material not adhered to a predetermined part may be employed as long as predetermined shielding performance can be realized.

The coating film and/or the shielding material including borosilicate glass may be used in combination with a structural material except the borosilicate glass, to thereby provide functions which cannot be provided with the borosilicate glass alone. Such a structural material in a form of fiber, granules, powder, or the like may realize an appropriately mixed state with the borosilicate glass, to thereby allow realization of the intended functions. Further, prural components may be mixed into an appropriate ratio for use, or may intentionally be dispersed inhomogeneously as long as the intended effects may be realized.

Further, B₂O₃ in the borosilicate glass is a component, which may be vitrified alone, and is a component providing high durability against a metal vapor in use as a component of multicomponent glass. B₂O₃ may preferably be used as a glass component for realizing an effect of suppressing degradation of the shielding capability against gases with time; the degradation may be caused by the metal vapor or the like.

In the apparatus for producing a borosilicate sheet glass article of the present invention, the borosilicate glass of the coating film and/or the shielding material is preferably multicomponent oxide glass containing three components or more.

The borosilicate glass of the coating film and/or the shielding material of the multicomponent oxide glass containing three components or more does not consist of one metal oxide, but includes two or more types of the borosilicate glass as components in a content of at least 1 mass% or more. Any borosilicate glass may be used as long as the intended functions can be realized.

In an apparatus for producing a borosilicate sheet glass article according to claim 4, the multicomponent oxide glass containing three components or more preferably contains one of SiO₂ and Al₂O₃ in a content of 1 mass% or more in addition to the above composition.

The multicomponent oxide glass containing three components or more containing one of SiO₂ and Al₂O₃ in a content of 1 mass% or more refers to the multicomponent oxide glass having a composition containing one component of silica (silicon dioxide) and alumina (aluminum oxide) in a content of 1 mass% or more as a component used for forming inorganic multicomponent oxide glass of the coating film and/or the shielding material.

SiO₂ is a component converting into glass with high viscosity as a single substance and may be employed as a glass component, to thereby realize high chemical durability. Al₂O₃ may be included as a component in the glass composition to expand a vitrification region of the component and improve a chemical durability. Further, Al₂O₃ is an essential component providing a particularly important effect of adjusting high density of glass in the presence of other coexisting cations. Al₂O₃ in an addition amount of several % to several tens % may serve to improve gas shielding performance of the glass.

Each of the components must be included in a content of at least 1 mass% as oxydized-form to exhibit its significant effect.

At any rate, the functions required for the multicomponent glass composition include: providing the shielding performance to the metal material or the refractory material which cannot be realized with the heat resistant metal material containing a platinum group element or the refractory material containing an inorganic oxide alone; and providing thermal properties, that is, viscosity or thermal expansion coefficient preventing cracking, peeling, or deforming due to expansion or the like of the heat resistant metal material or the refractory material at high temperatures. Thus, the shielding function of the inorganic multicomponent oxide glass realized at normal temperatures must be maintained in a high temperature state of 1,600°C or higher over time.

In the apparatus for producing a borosilicate sheet glass article of the present invention, the coating film and/or the shielding material each preferably includes metal oxide particles.

The coating film and/or the shielding material including metal oxide particles refers to a coating film or a shielding material including prural metal oxide particles having sufficient heat resistance in a content of 1 mass% or more.

As such oxide particles, a heat resistant oxide material such as alumina, silica, titania, magnesia, zirconia, tungsten oxide, iron oxide, nickel oxide, cobalt oxide, or manganese oxide may be used as particles in a desired form.

In an apparatus for producing a borosilicate sheet glass article, the structural member is suitably used for at least one of a container part where the molten glass remains and/or a part where the molten glass flows.

Use of the structural member for a container part where the molten glass for producing a borosilicate glass article remains and/or a part where the molten glass flows refers to use of the structural member for an outer wall surface of a heat resistant container formed of the platinum group element or a tank having a refractory structure and formed of an inorganic oxide for holding the molten glass, or for a surface corresponding to an outer side of a structure such as a gutter or a pipe used for allowing the molten glass to flow out from one container or tank to a further process.

In an apparatus for producing a borosilicate sheet glass article according to claim 1, the structural member consists of at least one of a heat resistant metal material containing the platinum group element, and a refractory material containing an inorganic oxide in a structure of two layers or more, and the structural member suitably includes an inner layer containing at least one of glass and ceramics between the two layers.

The structural member comprized of a heat resistant metal material containing the platinum group element and/or the refractory material containing an inorganic oxide in a structure of two layers or more and having an inner layer containing glass or ceramics between the two layers refers to a structural member having: structure of a total of three or more layers; two layers thereof corresponding to the outer layers comprized of the heat resistant metal material containing the platinum group element and/or the refractory material containing the inorganic oxide; and one or more inner layers each containing glass or ceramics. In the inner layer, the glass may be in any form of molten form, devitrified form, semi-molten form, powder form, granule form, or pebble form, and the ceramics may have various forms similarly. Further, the inner layer may contain a gas phase of air, nitrogen, argon, helium, neon, carbon monoxide, carbon dioxide, oxygen, chlorine, or the like as required.

Athicknessof each of the layers is not particularly limited, but each of the outer layers contacted directly with the molten glass preferably has a sufficient thickness for providing durability over a long period of time. Further, the inner layer and the outer layers are not particulaly limited for whether they are contact with each other or not.

Moreover, The apparatus for producing a borosilicate sheet glass article of the present invention preferably includes forming means for downward draw forming.

The apparatus including forming means for downward draw forming ('downdraw forming') refers to an apparatus including forming means of a downdraw forming method such as a slot-downdraw-forming method, an overflow-downdraw-forming method, or a roll-out-forming method as a part of the apparatus for producing a borosilicate sheet glass article.

In the case where the apparatus for producing a borosilicate sheet glass article including forming means for downdraw forming is used, a inhomogeneous part of the molten glass such as impurities may cause not only defects at the inhomogeneous part alone but also continuous diviation in dimensions or the like through draw forming=; therefore it causes serious problems because the defects are widely distributed. Thus, the application of the present invention leads to not only elimination of causes for impurities or the like but also many factors such as dimensional stability and surface quality of a sheet glass, and is particularly important. Further, it is particularly important to apply the present invention for the overflow-downdraw-forming method because the sheet glass has a free surface and deterioration of surface quality due to defects such as impurities, knots, scratches, threads, and bubbles is more apparent in the overflow-downdraw-forming method than in other methods.

Here, meaning of an apparatus for producing a borosilicate sheet glass article involves an apparatus for producing the borosilicate sheet glass article to be incorporated in one of an image input apparatus and an image output apparatus.

Regarding the apparatus for producing a borosilicate sheet glass article to be incorporated in an image input apparatus or an image output apparatus, it is accompanied that a borosilicate sheet glass article produced by the apparatus for producing a borosilicate sheet glass article of the present invention is used as a member used for a part serving as an interface incorporated in an electronic device for controlling image input and output and transmitting image data directly, and that the borosilicate sheet glass article is required for high homogeneity or dimensional accuracy.

Specific examples of the image input apparatus or the image output apparatus include: a static image or dynamic image display apparatus such as a television (TV) or a flat panel display (FPD); an image displayportable terminal such as a projecting tube including a projector, a scanner equipped with a line sensor or an area sensor, various cameras represented by a digital camera and the like, a mobile phone equipped with a camera, and PHS; a large area electric image display apparatus equipped with LD, a neon tube, or the like; and an optical fiber transmission apparatus. The apparatus of the present inventionproduces various borosilicate sheet glass articles to be incorporated in such electronic equipment and electronic apparatuses.

The apparatus for producing a borosilicate sheet glass article of the present invention is an apparatus for producing sheet glass to be incorporated in an image display apparatus.

The apparatus for producing sheet glass to be incorporated in an image display apparatus refers to an apparatus for producing sheet glass to be incorporated in a flat panel display (FPD), that is, an image display apparatus. Examples of FPD include a plasma display panel (PDP), a vacuum fluorescent display (VFD), a field emission display (FED), an electroluminescent display (ELD), alight emitting diode display (LED display), a liquid crystal display (LCD), an electrocromic display (ECD), and an elecrophoretic display (EPD) . To be more specific, the apparatus is used to produce a borosilicate sheet glass article from a molten glass, which is be used for an FPD panel including a liquid crystal device or a panel of an organic EL, inorganic EL, or the like. The thin sheet glass produced by the manufacturing apparatus of the present invention may be used as the thin sheet glass for a liquid crystal display substrate regardless of difference in liquid crystal device or in image display system.

The apparatus for producing a borosilicate sheet glass article of the present invention may be an apparatus for producing sheet glass used for a solid-state image sensing device.

The apparatus for producing the sheet glass used for a solid-state image sensing device refers to an apparatus for producing from the molten glass with the thin sheet glass being used as a cover glass for an image input device such as a charge coupled device (CCD) or a complementary metal oxide semiconductor (CMOS) to be incorporated in an image display potable terminal and the like such as various cameras represented by a digital camera, a mobile phone equipped with a camera, and PHS.

Further, the apparatus for producing a borosilicate sheet glass article of the present invention may be a production apparatus for mass production. Alternatively, the apparatus for producing a borosilicate sheet glass article of the present invention may be used for production of small amounts of various articles.

Further, the apparatus for producing a borosilicate sheet glass article of the present invention may be used as an apparatus for producing a glass fiber to be used for fiber reinforced plastics (FRP) or fiber reinforced cement (FRC).

The glass fiber refers to a production article obtained by using a glass melting furnace having a platinum bushing for a forming part, drawing molten glass at high speed for cooling, and bundling and winding prural fibers. The presence of metal impurities and the like in the molten glass significantly degrades the performance of a glass article to be formed. As described above, the structure of the present invention may be applied to the glass melting furnace as a glass fiber production apparatus, to thereby adjust the amount of platinum group element to be eluted into the molten glass from the apparatus formed of a heat resistant metal containing the platinum group element and suppress of defects. Thus, use of the present invention for a glass fiber manufacturing is an excellent example of its application.

Further, the apparatus for producing a borosilicate sheet glass article of the present invention may be used as an apparatus for producing glass powder used for applications in which a plurality of members such as electronic components and optical components are formed through heat sealing.

The present invention may be applied to the apparatus for producing glass powder, to thereby facilitate forming of the glass powder capable of realizing desired properties without defects such as incorporation of impurities.

Further, the apparatus for producing a borosilicate sheet glass article of the present invention may be used as an apparatus for producing tubular glass to be used for electronic component applications, illumination applications, medical applications, or the like.

To be specific, the apparatus for producing a borosilicate sheet glass article of the present invention may be used as a glass article production apparatus for forming tubular glass having various dimensions such as tubular glass for reed switch, tubular glass for diode, tubular glass for mercury switch, tubular glass for thermostat, tubular glass for liquid crystal backlight, tubular glass for halogen lamp, tubular glass for xenon lamp, tubular glass for fluorescent lamp, tubular glass for ampoule tube, and tubular glass for solar energy accumulation.

Further, the production apparatus of the present invention may be used for applications requiring control of dissolusion condition of a platinum group element in a glass article such as various lens materials, nonspherical press lenses, optical fiber members, functional optical fibers, and the like each used for optical applications and containing a lanthanide element, an actinide element, or the like having a large atomic number for realizing specific refractive index and dispersion.

Further, the apparatus for producing a borosilicate sheet glass article of the present invention may operate following various control systems for controlling a series of glass production devices including a device for measuring temperatures, a device for measuring a raw material charging amount, a device for controlling a heating state, and a device for changing a forming speed. In addition, the control systems may be backed up by support systems ensuring respective functions.

The apparatus for producing a borosilicate sheet glass article of the present invention may be used for an application requiring reheating of glass to a temperature equal to or higher than a softening point for reworking and forming a borosilicate glass article preformed from the molten glass into a desired precise shape, to thereby allow reduction in damages on wall surfaces or the like of the apparatus for producing a borosilicate sheet glass article brought into direct contact with the molten glass in a high temperature state. To be specific, the apparatus for producing a borosilicate sheet glass article of the present invention may be applied to a heat melting apparatus for redraw forming involving heat working of tubular glass or thin sheet glass, a heat melting furnace for recycling glass cullets, or the like.

The method of producing a borosilicate sheet glass article of the present invention relates to production of a borosilicate sheet glass article from the molten glass by using the apparatus according to claim 1.

Production of a borosilicate sheet glass article from the molten glass by using the apparatus according to claim 1 refers to production of a borosilicate sheet glass article by: using an apparatus including, the heat resistant metal material containing a platinum group element and/or refractory material containing an inorganic oxide each forming interface in contact with the molten glass and treated to have predetermined shielding capability against gas molecules each having a molecular diameter equal to or smaller than that of an oxygen molecule on the back side of the surface brought into direct contact with the molten glass; charging glass raw materials into the apparatus provided with a device for heating the glass raw materials and the molten glass; heating the whole to a predetermined temperature with the heating device for glass melting; further heating the whole for homogenization of the molten glass; forming the molten glass through a desired forming method; and cooling the resultant.

The glass raw materials are prepared by: mixing homogeneously a metal oxide, a metal carbonate, a metal sulfate, a metal nitrate, a metal, glass cullets, and the like each in a form of powder or granules with appropriate size; weighing predetermined amounts of some of glass materials in accordance with a glass composition to be obtained through glass melting; and mixing the whole by using various powder mixing devices.

The apparatus for producing a borosilicate sheet glass article may have a structure including a plurality of tanks or containers are connected or a structure including a single container as long as the borosilicate sheet glass article is eventually formed into a predetermined shape. In the case where the molten glass is heated in the plurality of tanks or containers and eventually formed into a desired shape, the plurality of tanks or containers may be independent from each other. For examples, in the first case, the apparatus having a structure including a plurality of tanks or containers include a glass melting furnace for continuous production and a batch-type melting pot. In the latter case, the apparatus having a structure including independent containers is an apparatus characterized by homogenization through cullet mixing of rough melt glass prepared in a melting pot before charging the cullet of rough melt glass into a fining pot for removing tiny bubbles from glass melt.

The glass raw materials are continuously or intermittently charged into the apparatus for producing a borosilicate sheet glass article through a charging port of glass raw materials provided in the apparatus at a speed in accordance with production conditions . Various charging systems of glass raw materials may be employed, and examples thereof that may be used include an oscillating batch charger, an enfolding charger, a rotary charger, a screw charger, a belt conveyor, a blanket charger, and the like.

The charged glass raw materials are heated with the above-mentioned heating device into the molten glass, and a homogenization operation of the molten glass is performed by employing suitable homogenization means in accordance with the kind, required homogeneity, and the like of the molten glass. For example, inclusion of heterogeneous glass in the apparatus for producing a borosilicate sheet glass article is prevented by: using a bubbler, a stirrer, or the like as a physical mixing device; using a dam wall, a gate, a curved structure, or the like for reducing a so-called short pass phenomenon by changing intentionally a flow direction of the molten glass; or providing an atmospheric partial pressure adjusting (or controlling) device for accelerating removal of bubbles in the glass or a pressure or temperature adjusting device such as a booster.

The molten glass in a homogenous state is subjected to precise heat forming in glass forming region provided at an end of a glass feeder of the apparatus for producing a borosilicate sheet glass article by forming means in accordance with application or the like of the glass article. Examples of the forming method that may be used include a roll forming method, a slot down draw formingmethod, a fusion forming method, an overflow down draw forming method, and a float forming method. For production of a glass article having a different shape by using the apparatus of the present invention, examples of the forming method that may be used for production of tubular glass include a Danner forming method, a Vello forming method, a down draw forming method, and an up draw forming method. Examples of the forming method that may be used for production of container glass include a press forming method and a blow forming method. Other examples thereof include a bushing method, a blow forming method, and a cast forming method.

The borosilicate sheet glass article to be produced through the production method of the present invention may have any shape very similar to a final shape of the product. That is, the borosilicate sheet glass article may be subjected to: an operation for dividing glass sheet having a large area produced through the production method of the present invention; polishing treatment for improving dimensional accuracy of a glass surface; film formation on the surface ; and a reinforcement treatment such as ion exchange treatment.

A method of producing a borosilicate sheet glass article of the present invention allows production of a borosilicate sheet glass article by: holding at a temperature equal to or higher than a softening point of borosilicate glass used for forming the coating film and/or the shielding material by using the apparatus according to claims 1; and providing shielding capability against gas components each having a diameter equal to or smaller than a diameter of an oxygen molecule.

Productionof a borosilicate sheet glass article by holding at a temperature equal to or higher than a softening point of borosilicate glass used for forming the coating film and/or the shielding material by using the apparatus according to claims 1, and providing shielding capability against gas components each having a diameter equal to or smaller than the diameter of the oxygen molecule refers to production of a borosilicate sheet glass article by subjecting borosilicate glass to heat treatment at a temperature equal to or higher than it softening point to form the borosilicate glass into a melt state, which is more fluid than a softened and deformed state, and providing shielding capability against gas components each having the diameter equal to or smaller than that of an oxygen molecule to the predetermined part of the heat resistant material of metals and/or a refractory material of inorganic oxides, containing a platinum group element, that is, providing the coating film and/or the shielding material containing borosilicate glass.

Production of the molten glass by holding at a temperature equal to or higher than its softening point involves holding under controlled temperature conditions. It is important to employ appropriate conditions such that a large heat stress load is not applied to an interface between: the coating filmand/or the shielding material formed of borosilicate glass; and the heat resistant metal material containing the platinum group element and/or the refractory material containing an inorganic oxide.

Such heat treatment improves shielding capability against hydrogen, water, or hydrogen ions, or a gas such as helium or argon, which cannot be realized with the heat resistant metal material containing a platinum group element and/or the refractory material containing an inorganic oxide alone, by intentionally changing the properties and chemical and physical properties of the coating film and/or the shielding material formed of borosilicate glass or the borosilicate glass. Further, the heat treatment improves mechanical strength, and prevents vaporization, evaporation, peeling, or the like of specific components of the heat resistant metal material containing the platinum group element and/or the refractory material containing an inorganic oxide. Such heat treatment allows assured prevention of inclusion of impurities into the molten glass.

The heat treatment may involve heating of the coating film and/or the shielding material formed of borosilicate glass to a temperature equal to or higher than its softening point for a predetermined period of time "together" with the heat resistant metal material containing the platinum group element and/or the refractory material containing the inorganic oxide, or the coating film and/or the shielding material formed of borosilicate glass may be heated to a temperature equal to or higher than its softening point for a predetermined period "separately" from the heat resistant metal material containing the platinum group element and/or the refractory material containing an inorganic oxide. For heating the coating film and/or the shielding material "together" with the heat resistant metal material containing a platinum group element and/or the refractory material containing an inorganic oxide, attention must be paid such that no changes occur in the dimensions, shapes, chemical states, and the like of the heat resistant material of metals and/or a refractory material of inorganic oxides, containing a platinum group element, not to prevent realization of desired functions. A heating method must be carefully selected and must be performed under controlled heating period and heating temperature. Note that heating "together" refers to heating under the same time and spatial conditions, and heating "separately" refers to heating under partly different conditions or completely different conditions.

The softening point of the borosilicate glass refers to a temperature providing a glass viscosity of 10^{7.6} dPa·s, which can be determined by measuring through a method defined in JIS R3103-1 (2001) as a measurement method using glass fiber, for example.

The method of producing a borosilicate sheet glass article of the present invention allows forming the sheet glass by using the apparatus according to claim 9 employing the forming means for downward draw forming.

Formation of sheet glass by using the apparatus according to claim 9 employing the forming means for downward draw forming refers to formation of sheet glass by using an apparatus employing the forming means of a downward draw forming method such as a slot down draw forming method, an overflow down draw forming method, or a roll out forming method as a forming device of the apparatus for producing a borosilicate sheet glass article of the present invention.

The method of producing a borosilicate sheet glass article of the present invention may employ the glass raw materials for borosilicate glass used for forming the coating film and/or the shielding material as molten glass raw materials in combination. The production method of the present invention may easily be applied to a case where the apparatus for producing a borosilicate sheet glass article is repaired and the like during production.

The borosilicate sheet glass article used for the method of producing a glass article of the present invention particularly preferably has an optical basicity value of 0.6 or less. The optical basicity of the glass refers to basicity of the glass that can be optically measured. A borosilicate glass having a basicity of more than 0.6 has a low oxygen gasification potential in the molten glass, and the borosilicate glass having a basicity of less than 0. 6 allows oxygen in the molten glass to grow into bubbles. Thus, the production method of the present invention is applied to the borosilicate glass article having a basicity of 0.6 or less as the borosilicate glass article to be melted by the apparatus of the present invention, to thereby allow further improvement in quality such as homogeneous degree of the borosilicate sheet glass article.

The borosilicate sheet glass article of the present invention is produced by using the apparatus according to any one of claims 1 to 12.

The borosilicate sheet glass article produced by using the apparatus according to any one of claims 1 to 12 refers to a borosilicate sheet glass article produced from molten glass by using an apparatus having features of the apparatus for producing a borosilicate sheet glass article.

Application of the apparatus for producing a borosilicate sheet glass article of the present invention allows formation of a borosilicate glass article having a shape of an ingot, a tube, a press formed product, or the like. Various forming methods may be used, to thereby provide an intended shape.

The borosilicate sheet glass article of the present invention contains a platinum group element in a content of 20 ppm or less and platinum in a content of 10 ppm or less in addition to above.

The borosilicate sheet glass article containing a platinum group element in a content of 20 ppm or less and platinum in a content of 10 ppmor less refers to a borosilicate sheet glass article produced by using the apparatus for producing a borosilicate sheet glass article of the present invention, and containing platinum, iridium, osmium, palladium, or rhodium, as a platinum group element in a total content of 20 ppm or less in mass, and platinum in a content of 10 ppm or less in mass.

That is, the borosilicate glass produced through the method of producing a borosilicate sheet glass article of the present invention by using the apparatus for producing a borosilicate sheet glass article of the present invention may contain a platinum group element in a content of an upper limit or less and platinum in a content of an upper limit or less. Borosilicate glass containing a platinum group element in a content of more than the upper limit and platinum in a content of more than the upper limit may cause coloring, impurity defects, or problems in electrical properties and the like of the borosilicate sheet glass article, so is not preferred. A lower limit for the content of the platinum group element or platinum in an environment employing no platinum group element as refractory material is 0, but a lower limit of 0 therefor in an environment employing the platinum group element or platinum as refractory material is not possible. In an environment employing platinum, the lower limit for the content of the platinum group element or platinum exists, and the borosilicate glass contains a platinum group element in a content of 20 ppm to 10 ppb and platinum in a content of 10 ppm to 1 ppb.

The borosilicate sheet glass article containing a platinum group element in a content of 20 ppm or less in mass and platinum in a content of 10 ppm or less in mass in borosilicate glass is produced through the method of producing a borosilicate sheet glass article of the present invention, to thereby provide advantages such as long period of durability of the glass production apparatus and reduction in cost of production.

The borosilicate sheet glass article of the present invention contains substantially no arsenic.

The borosilicate sheet glass article containing substantially no arsenic refers to a borosilicate sheet glass article containing substantially no content of arsenic (As) and using no arsenic compound to be added as a fining agent.

The glass article of the present invention may further contain components such as Li, K, Na, Ca, Rb, Ba, Mg, Zn, Sn, Sr, Ga, La, P, Zr, Bi, and Pb in varying contents in accordance with the application of the glass, to thereby realize desired functions.

The borosilicate sheet glass article of the present invention may further contain OH, O, H, S, N, C, F, Cl, Ne, He, Ar, Kr, and Xe in limited contents.

The borosilicate sheet glass article of the present invention may further contain component elements such as Fe, Ti, Cr, Co, Ni, Se, Cs, Cu, Au, Ag, La, V, Mn, Zn, Nb, Sb, Ce, Zr, He, W, Y, In, Os, Ta, Te, Po, Mo, Tc, Po, Re, U, Tl, Th, Nb, Ir, Hf, Nd, Sm, Ac, Pa, Pu, Am, Cm, Bk, and Cf in contents of 10 mass% or less in oxide equivalents.

The borosilicate sheet glass article of the present invention is produced by using the apparatus according to any one of claims 1 to 12 and has a compositional difference in contents of respective components between molten glass and borosilicate glass used for forming the coating film and/or the shielding material of 40% or less in mass%.

The borosilicate sheet glass article produced by using the apparatus according to any one of claims 1 to 12 and having a compositional difference in contents of respective components between molten glass and borosilicate glass used for forming the coating film and/or the shielding material of 40% or less in mass% refers to a borosilicate sheet glass article having a structure containing borosilicate glass for the coating film or the shielding material and having a compositional difference in contents of respective components between the borosilicate glass and the molten glass to be formed into the borosilicate sheet glass article of 40% or less in mass%.

In the case where a difference between contents of respective components in the borosilicate glass used for forming the coating film and/or the shielding material and the molten glass to be formed into the borosilicate sheet glass article is more than 40%, and in the case where a problem occurs in which the borosilicate glass of the coating film and/or the shielding material is mixed into the molten glass during melting of the borosilicate sheet glass article, homogenization of the molten glass by aid of a homogenization device and the like provided in the melting furnace may involve difficulties. Thus, an upper limit for the compositional difference is preferably 40%.

As a method of producing the apparatus for producing a borosilicate sheet glass article of the present invention, various methods may be employed as a method of forming the coating film and/or the shielding material formed of borosilicate glass and/or metal oxide particles, in particular, as long as the method does not inhibit the performance of the target heat resistant metal or refractory material. Examples of the method include: a flame spray coating method roughly classified into rod-type and powder-type; a method employing plasma jet; a method employing chemical evaporation; a method employing porcelain enamel; a method employing a sol-gel method; and a method combining the above-mentioned methods. Other methods may be employed as long as the apparatus for producing a borosilicate sheet glass article of the present invention can be formed.

The structure including the heat resistant metal material containing a platinum group element and/or the refractory material containing an inorganic oxide in two layers or more can be formed by: forming an inner layer formed of inorganic oxide glass and/or metal oxide particles on a non-glass contact surface of an outer layer brought into contact with the glass through the above-mentioned production method; and providing an outer layer as a third layer so as to surround the inner layer. The order for production of the outer layer and the inner layer may be reversed. That is, the inner layer may be provided with an outer layer parted on an opposite side of the glass, and the outer layer serving as a glass contact surface may be provided.

(1) As described above, the apparatus for producing a borosilicate sheet glass article of the present invention includes a structural member formed of a heat resistant metal material containing a platinum group element and/or a refractory material containing an inorganic oxide, each being brought into contact with molten glass, in which the structural member has shielding capability against gas components each having a diameter equal to or smaller than a diameter of an oxygen molecule varying by 1/10 or less of an initial shielding capability after being held at 1,600°C for 10 days. Thus, degradation of the heat resistant metal material containing a platinum group element or the refractory material containing an inorganic oxide which is a structural material used for forming the apparatus to be heated to a high temperature state to be brought into direct contact with molten glass, can be reduced. Further, the inclusion of the structural material into the molten glass caused by degradation or the like of the structural material can be reduced, and the number of defects in the glass article can be reduced.

(2) In the apparatus for producing a borosilicate sheet glass article of the present invention, the structural member include a coating film and/or a shielding material formed on a back side of a surface brought into contact with molten glass. Thus, after arbitrary selection of the structural member of the apparatus for producing a borosilicate sheet glass article, a coating film or a shielding material suitable for the structural member or glass to be melted can be selected. Further, the structural member may have appropriate functions at reasonable cost for realizing shielding capability against gases in addition to functions heretofore required such as chemical durability against molten glass and high temperature strength.

(3) In the apparatus for producing a borosilicate sheet glass article of the present invention, the coating film and/or the shielding material includes borosilicate sheet glass. Thus, the surface of the heat resistant metal material containing a platinum group element and/or the refractory material containing an inorganic oxide may be coated in a physically and chemically uniform state across a wide area. Further, the thickness or the like of the coating film and/or the shielding material may easily be adjusted as required, to thereby arbitrarily change its structure in accordance with the type, application, and the like of the molten glass.

(4) In the apparatus for producing a borosilicate sheet glass article of the present invention, the borosilicate glass of the coating film and/or the shielding material is multicomponent oxide glass containing three components or more. Thus, various properties such as strength and corrosion resistance required for the heat resistant metal material containing a platinumgroup element or the refractory material containing an inorganic oxide can easily be finely adjusted by changing the glass composition or the like. Gases attacking the surface of the heat resistant metal material containing a platinum group element or the refractory material containing an inorganic oxide in a high temperature state can be shielded efficiently.

(5) In the apparatus for producing a borosilicate sheet glass article of the present invention, the multicomponent oxide glass containing three components or more contains one of SiO₂ and Al₂O₃ in a content of 1 mass% or more. Thus, a material not readily reacting with the heat resistant metal material or the refractory material and available at low cost can be used as a material used for coating the heat resistant metal material containing a platinum group element and/or the refractory material containing an inorganic oxide, without major changes in a conventional facility.

(6) In the apparatus for producing a borosilicate sheet glass article of the present invention, the coating film and/or the shielding material contains metal oxide particles. Thus, the structure of the coating film or the shielding material formed of the heat resistant metal material containing a platinumgroup element or the refractory material containing an inorganic oxide may be stabilized at increased temperatures, and damages on the coating film or the shielding material such as defects and peeling are hardly caused at increased temperatures.

(7) In the apparatus for producing a borosilicate sheet glass article of the present invention, the structural member is used for a container part where the molten glass remains and/or a part where the molten glass flows. Thus, concentration of the gas components present in the molten glass through the heat resistant metal material or the refractory material can be suppressed effectively. Further, enrichment of an oxygen concentration in the molten glass can be suppressed to reduce defects in the borosilicate sheet glass article.

(8) In the apparatus for producing a borosilicate sheet glass article of the present invention, the structural member is formed of a heat resistant metal material containing a platinum group element and/or a refractory material containing an inorganic oxide in a structure of two layers or more, and the structural member has an inner layer containing glass and/or ceramics between the two layers. Thus, the glass or the ceramics between the two layers functions so as to assuredly realize high shielding capability for a long period of time, and various maintenances in production can preferably suppressed to minimum.

(9) The apparatus for producing a borosilicate sheet glass article of the present invention further includes forming means for downward draw forming. Thus, a sheet glass article formed in accordance with gravitational force and having a stable shape can be formed continuously in large amounts, and the apparatus allows realization of an excellent method of producing glass to be used in large quantities.

(10) The apparatus for producing a borosilicate sheet glass article of the present invention is an apparatus for producing a borosilicate sheet glass article to be incorporated in an image input apparatus or an image output apparatus. Thus, the apparatus allows improvement in required quality of various borosilicate glass articles used for a high resolution image input or output apparatus regarding stones, threads, bubbles, and the like and allows stable production of a glass article. Further, the apparatus allows mass production of a glass article having sufficient properties satisfying other high requirements.

(11) The apparatus for producing aborosilicate sheet glass article of the present invention is an apparatus for producing sheet glass to be incorporated in an image display apparatus. Thus, borosilicate sheet glass can be produced over a long period of time by using the same facility environment. Production cost of sheet glass to be incorporated in an image display apparatus is reduced, to thereby allow sufficient supply of the sheet glass to market for information industry.

(12) The apparatus for producing a borosilicate sheet glass article of the present invention is an apparatus for producing sheet glass used for a solid-state image sensing device. Thus, the apparatus allows production of sheet glass capable of realizing high homogeneity of glass required for a cover glass to be incorporated for providing a solid-state image sensing device with large pixels.

(13) The method of producing a borosilicate sheet glass article of the present invention includes producing a borosilicate sheet glass article frommoltenglass by using the apparatus according to claim 1. Thus, the structural material components maybe prevented from melting into the molten glass to reduce the risk of defects such as coloring of the glass and reduction in transmittance due to dissolution of the structural material components and the like. The method allows realization of functions of a borosilicate sheet glass article strictly following its design specifications, to thereby allow assured realization of performance required by customers.

(14) The method of producing a borosilicate sheet glass article of the present invention includes: holding at a temperature equal to or higher than a softening point of borosilicate glass used for forming the coating film and/or the shielding material by using the apparatus according to any one of claims 3 to 12; and providing shielding capability against gas components each having a diameter equal to or smaller than a diameter of an oxygen molecule.
Thus, the coating film or the shielding material formed of borosilicate glass may be fixed and sealed to the heat resistant metal material containing a platinum group element or the refractory material containing an inorganic oxide which is a structural member of the apparatus, to thereby sufficiently utilize the performance of the production apparatus of the present invention and allow a smooth heating operation for production of the molten glass . Further, the coating film or the shielding material provided on the substrate forming the apparatus is subjected to heat treatment for reducing thermal strain applied to the structural member, to thereby provide an apparatus withstanding overload temperature environments such as heating and cooling applied to a surface part of the apparatus in production of the molten glass. The production method is capable of maintaining stable production of a borosilicate sheet glass article over a period of several tens months.

(15) The method of producing a borosilicate sheet glass article of the present invention includes forming sheet glass by using the apparatus according to claim 9 employing the forming means for downward draw forming. Thus, smoothness of a surface part of the sheet glass, which is a free surface being carefully controlled in a downward draw forming method, is not disturbed by inclusion of the defects. The production method allows continuous production of borosilicate sheet glass at high precision.

(16) The borosilicate sheet glass article of the present invention is produced by using the apparatus according to any one of claims 1 to 12. Thus, the borosilicate sheet glass article has high homogeneous degree and accurate forming dimensions realized, to thereby satisfy quality requirements of consumers for any applications. Use of other homogenization means or the like in combination may allow production of a borosilicate sheet glass article with even higher quality.

(17) The borosilicate sheet glass article of the present invention includes a platinum group element in a content of 20 ppm or less and platinum in a content of 10 ppm or less. Thus, in the case where the platinum group element or platinum is used for the apparatus for producing molten glass, the contents of the platinum group element and platinum to be dissolved into the borosilicate glass can be suppressed within predetermined ranges, and a phenomenon of metal stone formation in the molten glass due to the platinum group element can be adjusted.

(18) The borosilicate sheet glass article of the present invention includes substantially no arsenic. Thus, the borosilicate sheet glass article has excellent quality requiring no consideration in arsenic elution or the like from the surface of the borosilicate sheet glass article in various environments employing glass articles or in recycling of the borosilicate sheet glass article after use of the glass article.

(19) The borosilicate sheet glass article of the present invention is produced by using the apparatus according to any one of claims 2 to 12 and has a compositional difference in contents of respective components between molten glass and borosilicate glass used for forming the coating film and/or the shielding material of 40% or less in mass%. Thus, even if the borosilicate glass on an outer periphery of the heat resistant metal material containing a platinum group element or the refractory material containing an inorganic oxide is melted into the molten glass by accident, heterogeneous parts formed may be corrected through various homogenization treatments, to thereby allow an easy production of a homogeneous borosilicate sheet glass article causing no troubles in production.

### Description of the Preferred Embodiments

Hereinafter, descriptions will be given of the apparatus for producing a borosilicate sheet glass article, method of producing a borosilicate sheet glass article employing the production apparatus, and borosilicate glass article produced by using the production apparatus according to the present invention based on examples.

### [Example 1]

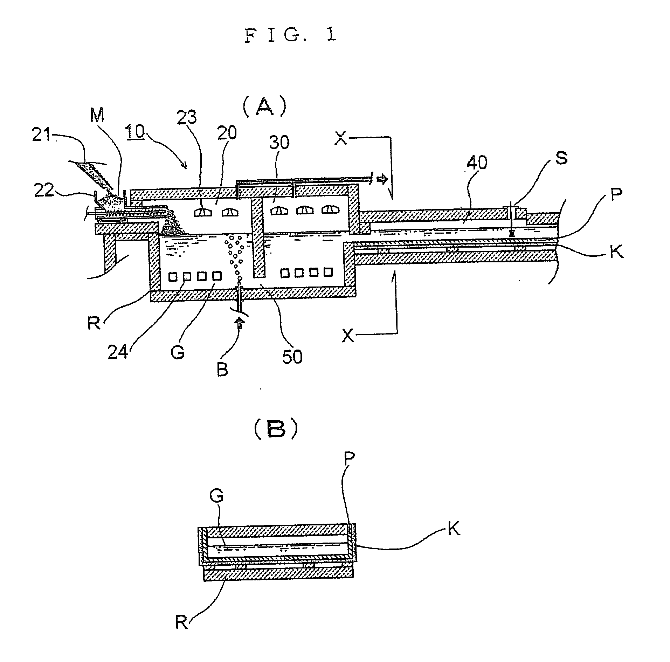

Figs. 1A and 1B each show a partially cross-sectional view of an apparatus for producing a borosilicate sheet glass article of the present invention. An apparatus for producing a borosilicate sheet glass article 10 includes a melting furnace and a glass forming part. However, Fig. 1A shows the melting furnace which is a main part of the present invention, and the sheet glass forming part is omitted. Glass to be produced by using the apparatus for producing a borosilicate sheet glass article is alkaline-free multicomponent borosilicate glass having a SiO₂-Al₂O₃-B₂O₃-MO (M represents an alkaline earth metal element such as Mg, Ca, Sr, or Ba) -based glass composition. Production of borosilicate sheet glass is performed through the following process by using the apparatus for producing a borosilicate sheet glass article.

First, required amounts of various glass raw materials are weighed and are homogeneously mixed by using a large raw material mixer for a predetermined period of time. The thus-obtained raw material mixture batch containing glass cullets is carried to a shooter 21 provided in a melting tank 20 of a melting furnace of the apparatus for producing a borosilicate sheet glass article 10, and is continuously charged into the melting tank 20 with the shooter 21 by using a screw charger 22, which is a raw material charger. The melting tank 20 is provided with a device for measuring temperatures, a device for controlling atmosphere, and a device for controlling a raw material charging amount (all now shown), and allows an operation in consideration of an operation state of a forming device and other various factors. A glass raw material M charged into the melting tank 20 is heated to a high temperature state with a burner 23 or an electrode 24 provided in the melting tank and forms into molten glass G through a batch melting reaction. The molten glass G in the melting tank 20 is not sufficiently homogenous and contains many fine bubbles formed during the batch melting reaction. Thus, air bubbling B is performed from bubblers provided in the melting tank 20 for a homogenization operation, and the molten glass G is allowed to flow into a fining tank 30 through a throat 50.

Removal of fine bubbles is further performed in the refining tank 30, to thereby form homogeneous molten glass G. Then, the molten glass G is subjected to a mixing operation for preventing scum generation on a surface of the molten glass G converted into a heterogeneous state due to vaporization or evaporation of components each having a high vapor pressure such as boron in the molten glass G with a stirrer S provided in a feeder 40, and the molten glass G in a state with further improved homogeneity is allowed to flow out to a forming part. The feeder 40 has a structure satisfying requirements of the present invention for solving the conventional problems of defects such as defects and bubbles in the glass article.
That is, an inner surface of the feeder 40 employs a 15% platinum-rhodium (an alloy of platinum group elements) heat resistant metal plate P for its bottom and side walls. Conventionally, the feeder 40 has a structure in which its outer surface is partly held by refractory materials R alone. Thus, the conventional feeder has a problem in that a borosilicate sheet glass article to be formed has a degraded quality because platinum defects formed due to damages over time on the inner surface of the heat resistant metal P brought into direct contact with the molten glass G in production of a glass article over a long period of time of several months are mixed into the borosilicate sheet glass.

Thus, the inventors of the present invention have performed studies for avoiding the problem, and have employed a feeder coated with a coating film K formed of homogenous chamott inorganic oxide glass having a thickness of 0.3 mm by plasma spray coating an entire outer surface of a side wall P and a furnace bottom P each formed of a 15% platinum-rhodium heat resistant metal brought into direct contact with the molten glass G with a mixed material of 75 mass% chamott (composition including 60 mass% of SiO₂ and 40 mass% of Al₂O₃) + 25 mass% of glass as shown in Fig. 1B. After such coating treatment, a part such as a curved part or edge part of a coated structure on which thermal stress is liable to accumulate storage is particularly selectively heated again to a temperature equal to or higher than a softening point of the glass material and then annealed such that excess thermal stress is not applied to the coating film on platinum as stress relaxation treatment. This treatment is a required operation for sealing defect parts such as uncoated parts as pin holes on the coating film which are defects of the spray coating treatment, and for improving sealing property or adhesive property of the coating film.

In the homogeneous borosilicate glass melted in the apparatus for producing a borosilicate sheet glass article including such a special feeder, deterioration of the inner surface of the feeder over time is suppressed. Further, the number of platinum defects is significantly reduced to 0.5/kg or less, and the platinum content in the glass article can be suppressed within the range of 10 ppm to 1 ppb. The inventors of the present invention assume that sealing and coating of the outer surface of the heat resistant metal with the coating film causes change in surface potential of the surface of the heat resistant material in the molten glass and suppression in oxygen enrichment in the molten glass brought into contact with the heat resistant metal. Thus, a chemical reaction involving reduced oxidation of the heat resistant metal and reduced dissolution of the heat resistant metal into the molten glass over a long period of time, to thereby hardly cause defects such as peeling. Alternatively, the inventors of the present investigation assume that the outer surface of the heat resistant metal is coated, to thereby prevent deposition of the metal material damaged through vaporization or evaporation over time in low temperature parts of the furnace to flow out and formdefects. The apparatus for producing a borosilicate sheet glass article having the structure of the present invention is used for production of the borosilicate sheet glass article, to thereby reduce the number of bubbles in the molten glass to 1/10 or less. The inventors of the present invention assume that the reduction in the number of bubbles is caused by sealing of the outer surface of the heat resistant metal with the coating film to suppress substance transfer between the molten glass and outside and an electrochemical reaction. For example, the coating film provides an effect of suppressing formation of bubbles defect in the glass article due to bubbles formed through electrolysis of the molten glass by a localized potential difference on the surface of the heat resistant metal, oxygen bubbles formed by change in oxygen partial pressure in a molten glass liquid, or the like.

### [Example 2]

Next, descriptions will be given according to more basic experimental tests on the apparatus for producing a borosilicate sheet glass article and borosilicate sheet glass article of the present invention capable of providing performance as described in Example 1.

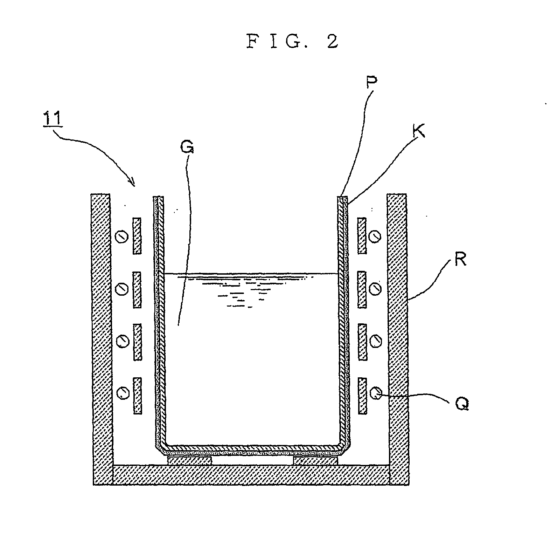

This study was performed through the following procedure.
That is, glass raw materials were mixed so as to produce a glass article having a desired composition as shown in Table 1 after melting, and a glass raw material batch was obtained by homogenously mixing the mixture with a small rocking mixer. The thus-prepared glass raw material batch was melted by using a 10% platinum-rhodium small melting pot 11 as shown in Fig. 2 as an apparatus for producing a borosilicate sheet glass article 11. Three specifications were prepared for the small melting pot 11 employing a coating film or a shielding material. The small melting pot 11 of the first specification (specification a) was prepared by: forming a porous coating layer formed of Al₂O₃ as one type of ceramics on a surface of a 10% platinum-rhodium substrate by spray coating; and forming a glass coating film by applying glass powder slurry containing 55 mass% of SiO₂, 40 mass% of Al₂O₃, 1 mass% of ZrO₂, and 4 mass% of MO (M = Ca, Mg, Ba) thereon and subjecting the applied slurry to heat treatment, to thereby reduce working distortion. The small melting pot 11 of the second specification (specification b) was prepared by: mixing a homogeneous mixture of alumina powder having an average particle size of 3 µm and powder formed of alkaline-free glass as inorganic oxide glass (having a composition of 60 mass% of SiO₂, 16 mass% of Al₂O₃, 10 mass% of B₂O₃, and 14 mass% of MO (M = Ca, Mg, Ba, Sr, Zn)) and 5 mass% of a water-soluble polymer polyvinyl alcohol as a binder; applying a slurry prepared by dispersing the mixture in water with a spray; forming a shielding material on the surface of the 10% platinum-rhodium substrate; and heating the whole to a temperature equal to or higher than a glass softening point of 1,400°C for heat treatment for stress relief and desfication. The small melting pot 11 of the third specification (specification c) was prepared by: forming a coating film by spray coating alkaline-free glass (having a composition of 59 mass% of SiO₂, 17 mass% of Al₂O₃, 10 mass% of B₂O₃, and 14 mass% of MO (M = Ca, Mg, Ba, Sr, Zn)); forming an SiO₂ coating film through a sol gel method by using metal alkoxylate; and removing stress and densifying under heating. The pot 11 of any specification as shown in Fig. 2 includes the coating film or shielding material K formed on the entire surface of the outer surface of the substrate P, that is, on a back side of the surface brought into contact with the molten glass.

**Table 1**

| Sample No. | 1 | 2 | 3 | 4 |
|---|---|---|---|---|
| (Mass%) | | | | |
| SiO₂ | 59.3 | 65.0 | 62.9 | 66.8 |
| Al₂O₃ | 15.4 | 16.1 | 15.7 | 11.3 |
| B₂O₃ | 9.5 | 9.9 | 10.2 | 11.2 |
| MgO | - | - | 1.2 | 2.4 |
| CaO | 5.6 | 8.0 | 6.5 | 4.3 |
| SrO | 5.6 | 1.0 | 0.9 | 2.1 |
| BaO | 3.6 | - | 0.5 | 1.5 |
| ZnO | 0.5 | - | 1.8 | 0.2 |
| SnO₂ | - | - | 0.1 | - |
| Sb₂O₃ | 0.50 | 0.01 | 0.10 | 0.20 |
| Cl₂ | - | - | 0.1 | - |

| Specification of glass melting pot | a | c | b | a |
|---|---|---|---|---|
| Number of platinum defects in glass (number/kg) | 0.1 | ND | ND | ND |
| Content of platinum in glass (ppm) | 1.2 | 1.1 | 1.1 | 0.9 |
| Content of rhodium in glass (ppm) | 2.7 | 2.3 | 2.5 | 1.9 |
| Number of bubbles in glass (number/kg) | ND | ND | 0.1 | ND |

Glass cullet raw materials prepared by melting in advance into the glass compositions as shown in Table 1 by using a glass melting furnace (not shown) provided with a burner combustion heating device under conditions of 1,500°C and 10 hours, and by pulverizing and forming the resultant were charged into the pot 11 (volume of 100 cc or 50 cc) in several portions and were melted again at a temperature of 1, 500 to 1, 600°C for 40 hours. The number of bubbles formed at the interface between the 10% platinum-rhodium pot and the molten glass was 0 in all samples. Then, the resultant was subjected to casting formation in a carbon mold, to thereby form a glass article having a shape of sheet glass for evaluation. The sheet glass after forming is charged in to an annealing furnace for cooling to a room temperature, to thereby obtain a final glass article for evaluation.

The number of bubbles and defects containing platinum in the glass were measured through visual observation and by using a stereoscopic microscope, and the platinum content in the glass was determined through chemical analysis or instrumental analysis. Table 1 shows sufficiently favorable results for the glass of sample Nos. 1 to 4 including: no bubbles observed, indicated by ND (samples not determined yet are represented by blanks); or less than 0.1 bubble/kgor less observed. Further, the results include: nodefects containing platinum observed, indicated by ND; and 0.1/kg or less impurity containing platinum observed. The contents of the platinum group elements in the glass, that is, platinum and rhodium contents in the glass determined through quantitative analysis was small , causing no problems. The results confirmed that the surface of the inner surface of the pot brought into direct contact with the molten glass was not significantly corroded to increase the concentration of platinum and rhodium in the molten glass. That is, the sample No. 1 has a platinum content of 1.2 ppm, a rhodium content of 2.7 ppm, and a total content of 3.9 ppm, for example. The test results revealed that the elution amount of the platinum group element satisfies both conditions of the glass article of the present invention including a platinum group element in a content of 20 ppm or less and platinum in a content of 10 ppm or less.

Next, for comparison in performance of the pot under change with time in a high temperature state, the glass cullets prepared as in the same manner as described above were placed in the pot and held in an electric furnace at 1,600°C for 10 days, and the number of bubbles, number of platinum defects, and contents of platinum and rhodium in the molten glass were measured for comparison with initial measured values after holding for 4 hours. As a result, no platinum defects were observed for all samples, indicated by ND. The sample No. 1 had 0.1 bubble/kg, but other samples had no bubbles. Regarding the contents of platinum and rhodium, the platinum content increased by a maximum of 1.3% and the rhodium content increased by a maximum of 2.2% with respect to the initial measured values. The increased amounts were each 10% or less with respect to the initial measured values, and the results confirmed that the samples each had sufficiently high shielding capability against gas components each having a diameter equal to or smaller than that of an oxygen molecule. The number of bubbles formed at the interface between the pot and the molten glass was compared by holding the pot including the sample at 1,600°C for 10 days, pouring out the molten glass in the pot once, charging the pot with fresh glass cullet having the same composition, and melting the charged glass cullet at 1, 600°C for 4 hours, and comparing the number of bubbles with that of an initial state. All samples had no bubbles and maintained the initial shielding capability.

The results of platinum and rhodium were obtained through chemical analysis.

According to Examples, a glass article having small amounts of defects and suitable to be applied to an image input or output apparatus or the like can be obtained by using the apparatus for producing a borosilicate sheet glass article of the present invention and applying the method of producing the glass article of the present invention.

### [Example 3]

Further, descriptions will be given of cases which prompted the present invention and tests regarding the cases.

The inventors of the present invention have performed many technical evaluations for solving a causal relationship of defects in the molten glass over a long period of time. The inventors of the present invention have focused on the following phenomenon in which homogeneous molten glass is incidentally obtained.

The molten glass is generally melted in a container formed of a refractory metal platinum. The platinum container generally has high heat resistance and is inevitable for high temperature melting of the glass. However, the platinum container has problems in deterioration over time and its strength, and formation of a crack or the like in platinum causes the molten glass to flow out of the container from the crack, to thereby wet an outer wall of the container. Even in such a case, the molten glass having a sufficiently high viscosity was cooled while permeating through voids of a refractory material surrounding the container, to thereby stop continuous flowing out of the molten glass. The inventors of the present invention have found out incidentally that in the case where the glass leaked out coats an outer surface of platinum of the container, the homogeneity of the molten glass improves in the following production of the molten glass and the number of bubbles, defects, and the like in the glass articles are decreased.

The inventors of the present invention have analyzed such observation results and performed studies for use of such a phenomenon for homogenization of the molten glass, and have performed the following tests.

### (Test 1)

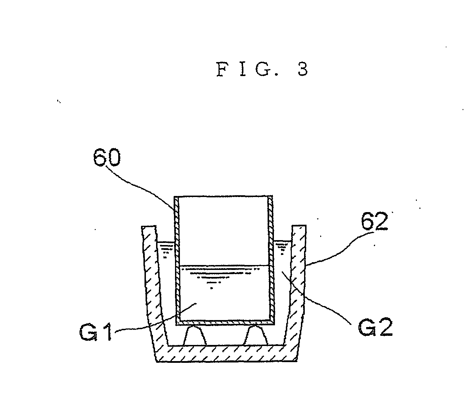

Fig. 3 shows a diagram for explaining the tests. First, for clear confirmation of effects, a container 60 with dimensions including a base of about 30 mm x 30 mm and a height of 50 mm was prepared by using a platinum foil having an intentionally small thickness of 50 µm. 20 g of sheet glass cullets G1 having the same composition as that of Example 1 was filled into the platinum foil container 60. Then, the container 60 filled with the glass cullets G1 was placed in an alumina crucible 62 having a volume of 50 cc, and glass cullets G2 having the same composition as that of the glass cullets G1 were filled outside the container 60. The glass cullets G1 and G2 were produced in the same melting furnace.

The alumina crucible 62 filled with the glass cullets through the platinum foil was held in a heat electric resistance furnace (not shown) in an air atmosphere under conditions of 1,500°C and 1 hour. Then, the alumina crucible was taken out of the furnace, and the interface between the glass cullets G1 and platinum was observed. As a result, no bubbles were observed at the interface between the glass cullets G1 and the platinum foil container 60. The same test was performed under the conditions of a temperature increased to 1, 580°C, and the results were not very different from the results of the test at 1,500°C and no bubbles were observed.

### (Test 2)

Meanwhile, as a comparative example, the glass cullets G1 having the same composition as that of Test 1 and produced in the same manner as in Test 1 were filled in the container 60 with dimensions including a base of about 30 mm x 30 mm and a height of 50 mm prepared by using the same platinum foil as that of Test 1. The container 60 was placed in the alumina crucible without the glass cullets G2 filled on the periphery the container 60 and was held under the same heating conditions (1,500°C and 1,580°C) as those of Example 1. Then, the container was taken out of the heat electric resistant furnace, and the interface between the glass cullets G1 and platinum was observed, resulting in many bubbles at the interface.

The inventors of the present invention have found out a possibility from the results that bubbles form on the wall surface shielded by the wall surface formed of platinum alone in high temperature states of 1,500°C and 1, 580°C for some reason, but the glass substrate having a similar composition may be provided outside the wall surface formed of platinum, to thereby suppress formation of bubbles.

### (Test 3)

Change in the number of bubbles with varying melting time was studied by using glass cullets having the same glass composition as that of Example 1. The studies were performed by forming a platinum foil into a shape of a container of 25 mm x 40 mm x 5 mm. The glass cullets and the platinum foil were washed with ethyl alcohol in advance to remove organic substances and the like attached to the respective surfaces. Then, the glass cullets G1 were filled into the platinum foil container in the same manner as in Test 1, and the platinum foil container was placed in the alumina crucible. The alumina crucible was charged into the heat electric resistance furnace without the glass cullets G2 filled on the periphery the container. The alumina crucible was held at 1,580°C for 1 hour and then held at 1,500°C for 1 hour, 4 hours, 7 hours, 24 hours, and 30 hours, and the number of bubbles formed at the bottom of the platinum foil container for each time period was measured.

As a result, 200 or more bubbles were observed after 1 hour. 100 or more bubbles were observed after 4 hours, and about 100 bubbles were observed after 7 hours. Further, 70 or more bubbles were observed after 24 hours, and 70 or more bubbles were observed after 30 hours. The bubbles each had a diameter of about 0.2 mm to 0.3 mm. Meanwhile, no bubbles were observed when the glass cullets G2 were filled on the periphery of the platinum foil container.

The results confirmed the reproducibility of Tests 1 and 2, no large changes were observed over time. Further, the results confirmed that the number of bubbles can be decreased by using the glass cullets G2 as a shielding material on the periphery of the platinum foil.

### (Test 4)

Glass hardly maintains a stable shape at high temperatures when filled on the periphery the platinum container. Thus, studies were performed whether chamott (60 mass% of SiO₂, 40 mass% of Al₂O₃) known as a refractory material can be used instead of the glass cullets G2. The glass cullets G1 having the same composition as that of Test 1 were filled in the container 60 with dimensions including a base of about 30 mm x 30 mm and a height of 50 mm prepared by using the same platinum foil as that of Test 1. Chamott powder instead of the glass cullets G2 as a shielding material was filled to the periphery of the container, and the alumina crucible was held at 1, 580°C for 30 minutes and then held at 1,500°C for 20 minutes. Then, the alumina crucible was taken out of the heat electric resistant furnace, and the interface between the glass cullets G1 and platinum was observed. As a result, many bubbles were observed at the interface. In this case, chamott filled on the periphery of the platinum container was partly sintered, but had gas permeability.

The results revealed that the chamott on the outer periphery of the platinum container brought into contact with glass is not converted into a fluid state but is in a sintered porous state and the number of bubbles formed in glass cannot be decreased.

### (Test 5)

The following test was performed to acquire basic knowledge for improving shape maintaining property of the glass cullets G2 in a high temperature state.

First, as a material replacing the conventional glass cullets G2, a filler was prepared by homogenously mixing 12 mass% of the glass cullets G2, 34 mass% of quartz glass, 5 mass% of pottery clay, and 49 mass% of flattery silica sand in mass. A mixture of the filler and the glass cullets G2 was filled between the alumina crucible and the platinum foil container while a mixed ratio of the filler and the glass cullets G2 was varied from 100 mass% (filler alone), 75 mass%, 50 mass%, 25 mass%, and 0 mass% (glass cullets G2 alone), and a test was performed under the same conditions as those of Test 1 (that is, holding at 1,500°C and 1,580°C) . A state of the mixture of the filler and the glass cullets after heat treatment was observed. As a result, with an increasing ratio of the glass, the mixture changes from a porous state to a dense state without pores. No bubbles were observed in the platinum foil container at a mixed ratio of 75 mass% or less, indicating a large effect as a shielding material. The results allow a prediction in that a mixed ratio of 25 mass% or more causes no problems in shape maintaining property. Further, water dropped onto the heat treated mixed powder of the filler and the glass cullets having an effect as a shielding material did not permeate and maintained its liquid droplet shape. This result revealed that a material having an effect as a shielding material must have property of preventing water permeation.

The above-mentioned series of basic tests revealed that the shielding material of the present invention maybe used to suppress the bubble formation phenomenon at the interface with platinum, and that the shielding material can be used for practical use.

## Claims

1. An apparatus for producing a borosilicate sheet glass article, comprising a structural member formed of at least one of a heat resistant material of metals and/or a refractory material of inorganic oxides, containing a platinum group element, each being brought into contact with molten glass, wherein
the structural member has shielding capability against gas components each having a diameter equal to or smaller than a diameter of an oxygen molecule, which varies by 1/10 or less of an initial shielding capability after being held at 1,600°C for 10 days.

2. An apparatus for producing a borosilicate sheet glass article according to claim 1, wherein the structural member comprises at least one of a coating film and a shielding material each having shielding capability formed on a back side of a surface brought into contact with molten glass.

3. An apparatus for producing a borosilicate sheet glass article according to claim 2, wherein at least one of the coating film and the shielding material each comprise borosilicate glass.

4. An apparatus for producing a borosilicate sheet glass article according to claim 3, wherein the borosilicate glass of at least one of the coating film and the shielding material comprises multicomponent oxide glass containing three components or more.

5. An apparatus for producing a borosilicate sheet glass article according to claim 4, wherein the multicomponent oxide glass containing three components or more comprises one of SiO₂ and Al₂O₃ in a content of 1 mass% or more.

6. An apparatus for producing a borosilicate sheet glass article according to claim 1, wherein at least one of the coating film and the shielding material each comprise metal oxide particles.

7. An apparatus for producing a borosilicate sheet glass article according to claim 1, wherein the structural member is used for at least one of a container part where the molten glass remains and a part where the molten glass flows.

8. An apparatus for producing a borosilicate sheet glass article according to claim 1, wherein: the structural member is formed of at least one of a heat resistant material of metals and/or a refractory material of inorganic oxides, containing a platinum group element in a structure of two layers or more; and the structural member has an inner layer containing at least one of glass and ceramics between the two layers.

9. An apparatus for producing a borosilicate sheet glass article according to any one of claims 1 to 8, further comprising forming means for downward draw forming.

10. An apparatus for producing a borosilicate sheet glass article according to any one of claims 1 to 9, which is an apparatus for producing a borosilicate sheet glass article to be incorporated in one of an image input apparatus and an image output apparatus.

11. An apparatus for producing a borosilicate sheet glass article according to any one of claims 1 to 10, which is an apparatus for producing sheet glass to be incorporated in an image display apparatus.

12. An apparatus for producing a borosilicate sheet glass article according to any one of claims 1 to 10, which is an apparatus for producing sheet glass used for a solid-state image sensing device.

13. A method of producing a borosilicate sheet glass article, comprising producing a borosilicate sheet glass article from molten glass by using the apparatus according to claim 1.

14. A method of producing a borosilicate sheet glass article, comprising: holding at a temperature equal to or higher than a softening point of borosilicate glass used for forming at least one of the coating film and the shielding material by using the apparatus according to any one of claims 3 to 12; and providing shielding capability against gas components each having a diameter equal to or smaller than a diameter of an oxygen molecule.

15. A method of producing a borosilicate sheet glass article, comprising forming sheet glass by using the apparatus according to claim 9 employing the forming means for downward draw forming.

16. A borosilicate sheet glass article, which is produced by using the apparatus according to any one of claims 1 to 12.

17. A borosilicate sheet glass article according to claim 16, which comprises a platinum group element in a content of 20 ppm or less and platinum in a content of 10 ppm or less.

18. A borosilicate sheet glass article according to claim 16, which comprises substantially no arsenic.

19. A borosilicate sheet glass article, which is produced by using the apparatus according to any one of claims 2 to 12 and which has a compositional difference in contents of respective components between molten glass and borosilicate glass used for forming at least one of the coating film and the shielding material of 40% or less in mass%.
